# EUROPEAN PATENT APPLICATION

(11) **EP 2 343 215 A1**
(43) Date of publication of application: **13.07.2011**
(21) Application number: 10405214.7
(22) Date of filing: 09.11.2010
(51) Int. Cl.: B60Q 3/02

(54) **Cabin illuminating device of aircraft**

(30) Priority: 07.01.2010 JP 2010001976
(71) Applicant: JAMCO CORPORATION, Mitaka, Tokyo (JP)
(72) Inventor: Mizukami Mineo, Tokyo (JP); Hozumi Hiroyuki, Tokyo (JP); Shiomori Jun, Tokyo (JP)
(74) Representative: Moinas, Michel

(57) **Abstract**

The invention provides an illuminating device suitable for illuminating a cabin of an aircraft. An OLED illuminating panel 100 is arranged on a ceiling of the cabin of an aircraft in a direction parallel to an axis line of the fuselage to illuminate the interior of the cabin. Further, the OLED illuminating panel is arranged on an upper portion of the window panels in a direction parallel to the axis line of the fuselage to illuminate the interior of the cabin. A control system for controlling the illumination within the cabin includes a central control unit and OLED illuminating panels 100 disposed above window panels and divided into multiple zones within the cabin, which is connected to the central control unit via power/signal lines, wherein the central control unit has a function to change and control the color of the OLED illuminating panels 100 of the respective zones.

## Description

### Field of the invention

The present invention relates to an illuminating device for illuminating a cabin of an aircraft using organic EL (organic electroluminescence; OLED).

### Description of the related art

Recently, OLED illuminating devices utilizing OLED panels as light emitting modules are being used in practice.

OLED panels emit light through the whole planar area of the panels, and require only a small amount of energy for emitting light. Further, the panels can be formed with a light weight.

Japanese patent application laid-open publications No. 2009-48814 (patent document 1) and No. 2009-164022 (patent document 2) disclose OLED illuminating devices.

Further, Japanese patent application laid-open publication No. 2008-260391 (patent document 3) discloses applying the OLED for illuminating the interior of an automobile or other vehicles.

It is important for the various equipments disposed in an aircraft to have superior certainty of operation, and to have light weight.

It is indispensable that the illuminating device within a cabin of an aircraft has sufficient illuminance to ensure the safety of passengers while avoiding occurrence of firing and other dangers.

Moreover, the operation of the aircraft requires the illuminating device to have long life, light weight and energy-saving property.

### SUMMARY OF THE INVENTION

The present invention aims at solving the problems of the prior art by providing a cabin illuminating device of an aircraft using OLED that satisfies the various demands described above.

In order to achieve the above-mentioned object, the present invention provides a cabin illuminating device of an aircraft, wherein an OLED illuminating panel is disposed in a direction parallel to an axis line of a fuselage on a ceiling within the cabin. Further, the cabin illuminating device can also have an OLED illuminating panel disposed in a direction parallel to an axis line of a fuselage on an upper portion of a window panel.

Moreover, the cabin illuminating device can include an OLED illuminating panel having a plurality of OLED illuminating panels disposed within a cabin of the aircraft divided into multiple zones, and a central control unit connected to the respective OLED illuminating panels via a signal line and a power line, wherein the central control unit is equipped with a function to adjust an illuminance and a color of the OLED illuminating panels of the respective zones, or a function to control the illumination pattern of the OLED illuminating panels of the respective zones.

Since the cabin illuminating device of an aircraft according to the present invention has OLED panels disposed on a ceiling or above window panels, the present invention enables to provide a light weight and power saving illuminating device.

### BRIEF DESCRIPTION OF THE DRAWINGS

FIG. 1 is an explanatory view illustrating an embodiment of the present invention;
FIG. 2 is an explanatory view showing another embodiment of the present invention; and
FIG. 3 is an explanatory view showing a control system of an illuminating device according to the present invention.

### DETAILED DESCRIPTION OF THE PREFERRED EMBODIMENTS

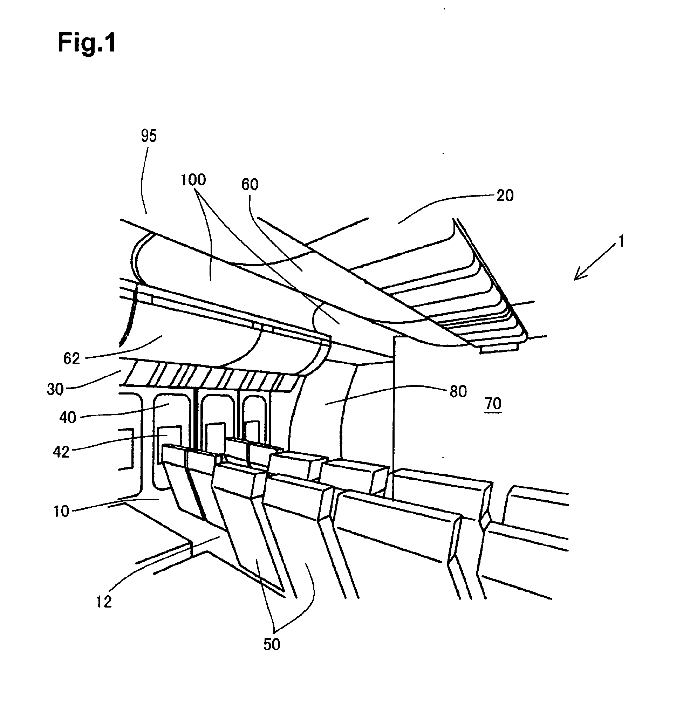

FIG. 1 is an explanatory view illustrating a preferred embodiment of an OLED illuminating device disposed in a cabin of an aircraft according to the present invention.

The cabin of an aircraft, the whole area of which being denoted by reference number 1, has an aisle 12 formed on a floor 10 of a cabin which connects to a door 80. Bins 60 for storing carry on luggage for passengers seated in the center-section seats are installed on both sides of passenger service units (PSUs) 20. Window panels 40 supporting windows 42 are disposed on the side walls. Seats 50 are disposed at appropriate intervals on the floor 10, and passenger service units (PSUs) 20 are disposed above the seats 50 and a partition 70 for separating the cabin from a galley is disposed on a front side thereof.

Bins 62 for storing carry on luggage are also disposed above the window panels 40.

The cabin illuminating device of the aircraft according to the present invention provides an OLED illuminating device 100 disposed on ceiling panel 95 surface and between bins 62 arranged above the window panels 40 and bins 60 arranged above the seats 50 in the center-section of cabin 1. The OLED illuminating device 100 can also be disposed on the passenger service units (PSUs) 20 above the seats 50 in the center section of the cabin.

Since the OLED illuminating device 100 emits light from the whole surface of the panel, it has superior illumination efficiency. Further, since the device 100 has light weight, it is suitably adopted for illuminating the interior of the aircraft.

According to the present embodiment, the OLED illuminating device 100 is disposed in a direction parallel to the axis line of the fuselage.

Further, the illuminance of the device can be adjusted easily by cabin attendants.

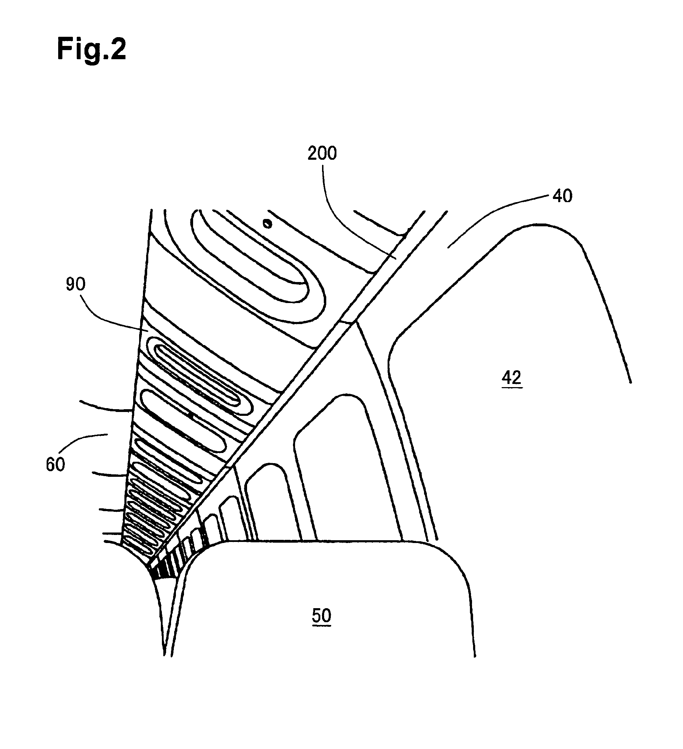

FIG. 2 illustrates another embodiment of the present invention.

According to the present embodiment, an OLED illuminating device 200 having a narrow width is disposed between an upper portion of the window panels 40 and a passenger service unit (PSU) 90.

The present embodiment enables efficient use of space, and is suitable for illuminating the cabin of an aircraft.

Further according to the present embodiment, the OLED illuminating device 200 is disposed in a direction parallel to the axis line of the fuselage. The illuminating device can either be a direct lighting or an indirect lighting.

Further, since the OLED illuminating panel can be designed to have a flat surface or a curved surface, it is suitably applied to the interior of the cabin of an aircraft having many curved surfaces.

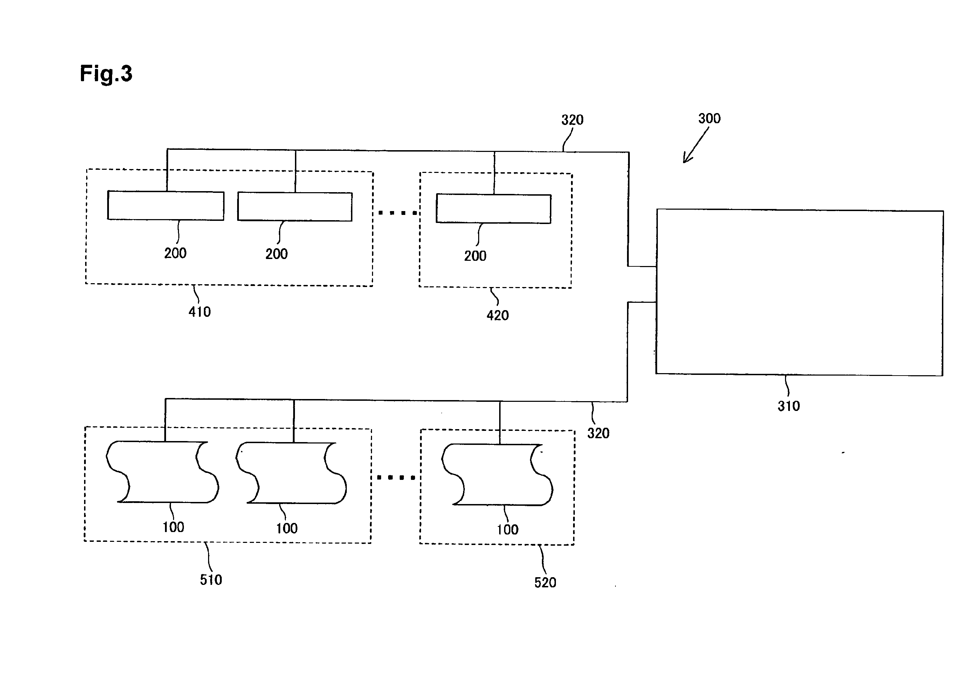

FIG. 3 is an explanatory view showing a control system of an illuminating device according to the present invention.

The control system denoted as a whole by reference number 300 includes a central control unit 310, and OLED illuminating panels 200 disposed above window panels connected to the central control unit 310 via a power/signal line 320 and divided into multiple zones 410 and 420 within the cabin.

Similarly, OLED illuminating panels 100 disposed on a ceiling at multiple zones 510 and 520 within the cabin are also connected to the central control unit 310 via the power/signal line 320.

The central control unit 310 has a function to control the luminance of the OLED illuminating panels in the respective zones. Further, the central control unit 310 has a function to change the color of the OLED illuminating panels in the respective zones and to control the same.

Since the central control unit has the above-described functions, it becomes possible to control the illuminance and color of the illumination in the respective zones, and to provide a most appropriate lighting for the passengers.

Furthermore, the central control unit has a function to set up lighting patterns for the whole cabin of the aircraft or for the respective zones. Thus, it becomes possible to provide a most appropriate lighting for the passengers according to the status surrounding the aircraft or according to the time zone.

## Claims

1. A cabin illuminating device of an aircraft disposed on an upper portion of a seat in a cabin of the aircraft, wherein
an OLED illuminating panel is disposed in a direction parallel to an axis line of a fuselage on a ceiling of the cabin.

2. A cabin illuminating device of an aircraft disposed on an upper portion of a seat in a cabin of the aircraft, wherein
an OLED illuminating panel is disposed in a direction parallel to an axis line of a fuselage on an upper portion of a window panel.

3. A cabin illuminating device of an aircraft comprising
an OLED illuminating panel having a plurality of OLED illuminating panels disposed within a cabin of the aircraft divided into multiple zones; and
a central control unit connected to the respective OLED illuminating panels via a signal line and a power line;
wherein the central control unit is equipped with a function to adjust an illuminance and a color of the OLED illuminating panels of the respective zones.

4. The cabin illuminating device of an aircraft according to claim 3, wherein
the central control unit has a function to control the illumination pattern of the OLED illuminating panels of the respective zones.
